# EUROPEAN PATENT APPLICATION

(11) **EP 1 632 342 A1**
(43) Date of publication of application: **08.03.2006**
(21) Application number: 05255371.6
(22) Date of filing: 01.09.2005
(51) Int. Cl.: B32B 17/10, B32B 27/36, C03C 27/12, C08J 5/12, C08J 5/18, C08J 7/18, B29C 59/14

(54) **Piled glass and method of manufacturing the same**

(30) Priority: 02.09.2004 JP 2004255574
(71) Applicant: Kawamura Sangyo Co., Ltd., Mie 512-8052 (JP)
(72) Inventor: Yokura, Miyoshi c/o Kawamura Sangyo Co., Ltd., Mie 512-8052 (JP)
(74) Representative: Smith, Norman Ian

(57) **Abstract**

A piled glass includes at least two glass plates (1, 2) and an intermediate film (12; 14) disposed between the glass plates (1, 2). The intermediate film (12; 14) has a layer formed by heat-sealing at least two biaxially oriented saturated polyester films. The biaxially oriented saturated polyester films have respective heat-sealed sides to which a low-temperature plasma treatment has been applied.

## Description

The present invention relates to a piled glass comprising at least two glass plates and an intermediate interlayer film interposed between the glass plates and a method of manufacturing the piled glass.

Crime proof glasses have conventionally been used as window glasses for houses, showcases in which jewels or the like are displayed, front glasses of automobiles and the like. Known crime proof glasses include the following glasses:
1. a single plate wired glass;
2. a single glass plate comprising a tempered glass;
3. a multilayer glass comprising two single glass plates; and
4. a laminated glass

A report issued by the Japanese Government and people joint convention of development and distribution of building components with high crime proof in March 2004 states that glass windows or doors are broken for invasion upon buildings such as houses in most of crimes (sneak-thieving) recently committed. More specifically, doors or windows are bored by a screw driver or the like so as to be unlocked (forced opening), a glass is broken by a bar or the like or exposed to flames from a gas burner of high temperature type thereby to be broken (burning). In order that the aforesaid ways of breaking a window or door may be prevented, it has been desired to develop a crime proof glass which cannot easily be broken and has a high heat resistance. The crime proof glass is required to have such a standard crime proof performance that it takes five minutes or more to break the glass.

Of the aforesaid crime proof glasses, the first wired glass is fragile against shock such that the wired glass is easily broken by a bar or the like, for example, whereupon wires can easily be cut off. As a result, the window can easily be unlocked in a short period of time and the building or house can easily be intruded into. The second single glass plate comprising a tempered glass is resistant against shock caused by a bat which is round. However, when thrust by a metal with a sharp edge such as an ice-pick, the second glass is instantaneously broken into pieces. It takes a lot of time to break the third multilayer glass. Furthermore, since peripheral portions of the two single glasses are bonded to each other, glass pieces are scattered around after breakage of the glass, whereupon it takes a lot of time to sweep away the glass pieces. Thus, the third glass has a higher crime proof but cannot be entitled to be hard to break, whereupon the third glass needs to be improved.

In the fourth laminated glass, a thickness of the intermediate film interposed between the two glasses may be increased to a large extent or three or more single-glass platees may be used into a multilayer. As a result, since proofs against breakage, penetration and the like are improved, the fourth glass has a higher crime proof than the aforesaid first to third glasses. More specifically, the following glasses have been proposed. As a first example, JP-A-2003-252658 discloses a laminated glass comprising layers of glass, a crosslinked ethylene-vinylacetate copolymer resin sheet (hereinafter, "crosslinked EVA"), polycarbonate (hereinafter, "PC"), crosslinked EVA, PC, crosslinked EVA and glass. This laminated glass is advantageous in the crime-proof. However, PC used as an intermediate film is expensive and has a softening point of 135°C and is accordingly disadvantageous in the heat resistance. As a result, the disclosed laminated glass is easily melted in subjection to a flame burner for a short period of time.

As a second example, JP-A-2002-321948 discloses a laminated glass comprising a pair of glass plates and a sheet of biaxially oriented polyethylene terephthalate with a thickness ranging from 110 to 400 µm bonded between the glass plates by the crosslinked EVA resin. This laminated glass uses as an intermediate layer the tough biaxially oriented PET (with melting point of 245°C). Accordingly, this laminated glass is advantageous in the fire-resistance and penetration resistance and accordingly has a high crime-proof.

However, since the PET sheet is made by a biaxially stretching manner, it is difficult to increase a thickness of the PET sheet, and variations in the thickness become larger as the thickness of the PET sheet is increased. Accordingly, currently commercially available transparent PET sheets have thicknesses not more than about 400 µm. For example, when a laminated glass which is not less than 1 m square is made of PET with a thickness of 400 µm, uniform transparency cannot be obtained since variations in the thickness of PET are large. As a result, a view through the glass is distorted. In view of this problem, the thickness of biaxially oriented PET film is practically about 250 µm.

As a third example, JP-A-2002-12457 discloses a laminated product in which an EVA or PVB layer bonding the glass plate and PET in the intermediate film has a thickness ranging from 1.2 to 2.0 mm. This laminated glass has a high toughness and heat resistance and accordingly a high crime-proof. However, since the EVA and PVB are each more expensive than PET, a crime-proof glass made of the laminated glass becomes more expensive. In order that a crime-proof glass which is less expensive but has a higher strength and heat-resistance may be obtained, the EVA and PVB of the intermediate film need to be rendered thinner so that the biaxially oriented PET is thickened accordingly. However, the biaxially oriented PET film which can be used to make a crime-proof glass having a uniform thickness and providing a non-distorted image therethrough needs to have a thickness not more than 250 µm as described above.

To improve the above-described biaxially oriented PET film, a thin biaxially oriented PET film needs to be used. For example, it is well known that a biaxially oriented PET film with a thickness of about 100 µm almost has no variations in the thickness. When five PET films each of which has no variations in the thickness are stacked for the use of an intermediate film of the laminated glass, an exceedingly tough non-distorted transparent crime-proof glass can be obtained. However, since a biaxially oriented PET film cannot conventionally be heat-sealed to another biaxially oriented PET film, the aforesaid tough non-distorted transparent crime-proof glass has not been obtained.

Therefore, an object of the present invention is to provide a piled glass which has a high strength and heat-resistance and which is cheap and superior in the crime-proof and a method of manufacturing the pile glass.

Molecules are crystallized so as to be oriented at the time of stretching in a biaxially oriented saturated polyester film. Accordingly, the biaxially oriented saturated polyester film has conventionally been supposed to be unable to be heat-sealed directly to another film of the same type, metal foil or different type of film at a temperature equal to or lower than a melting point thereof.

On the other hand, the inventor applied a low-temperature plasma treatment to a surface of the biaxially oriented saturated polyester film to reform the surface. As a result, the inventor found that the biaxially oriented saturated polyester film was able to have heat sealing at a relatively low temperature equal to or lower than a melting point thereof. The low-temperature plasma treatment brings oxygen atoms on the surface of the film. More specifically, a carboxyl group and/or a hydroxyl group is added to the film surface. This addition of the carboxyl and/or hydroxyl group is considered to give the aforesaid heat sealing at the relatively low temperature (a heating temperature ranging from 100°C to 200°C) equal to or lower than a melting point thereof to the biaxially oriented saturated polyester film which has originally no such heat sealing.

The inventor confirmed that a piled glass advantageous in the crime-proof and cost was able to be obtained when a plurality of the biaxially oriented saturated polyester films heat-sealed to each other were used for the intermediate film of the piled glass. Thus, the present invention was made.

The present invention provides a piled glass which comprises at least two glass plates and an intermediate film disposed between the glass plates, characterized in that the intermediate film has a layer formed by heat-sealing at least two biaxially oriented saturated polyester films, and the biaxially oriented saturated polyester films have respective heat-sealed sides to which a low-temperature plasma treatment has been applied.

A thick layer of the biaxially oriented saturated polyester films can be used for the intermediate film interposed between the glass plates. Accordingly, the toughness and heat resistance of the biaxially oriented saturated polyester film are exhibited. Consequently, the piled glass has a high level of penetration resistance and a high level of crime-proof. In this case, when each of thin biaxially oriented saturated polyester films heat-sealed to each other has a thickness equal to or smaller than 250 µm, for example and further has a constant thickness and high transparency, the entire layer can be thickened without use of an adhesive agent. As a result, a transparent crime-proof glass which is exceedingly tough and less distorted can be obtained.

Furthermore, cheap biaxially oriented saturated polyester film is used and other resin layers composing the intermediate layer can be rendered thinner, whereupon the cost of the piled glass can be reduced accordingly. Additionally, any inconvenience resulting from use of an adhesive agent can also be eliminated.

The biaxially oriented saturated polyester film of the present invention is a film obtained by biaxially orienting a straight chain thermoplastic polymer with ester linkage as a main chain. Such a typical polymer includes PET, polyethylene naphthalate (PEN) and polybutadiene terephthalate (PBT). In this case, the film may or may not contain copolymeric composition, an additive, for example, for improving characteristics (organic or inorganic filler etc.), plasticizer and/or the like.

The glass plate used in the invention should not be limited. Commercially available float glass may be used. The glass plate may be colored or transparent. Furthermore, the glass plate may be formed with a metal layer for the purpose of energy saving or the like.

In the aforesaid low-temperature plasma treatment, dc or ac high voltage is applied between electrodes so that the surface of the biaxially oriented saturated polyester film is exposed to electric discharge initiated and continued upon the voltage application. A suitable pressure may be selected according to a treating device or a manner of electric discharge. A treating atmosphere may include Ar, He, nitrogen, oxygen, air, carbon dioxide, steam or the like, which are generally employed. An atmosphere of steam is particularly preferred from the viewpoint of improvement in the adhesiveness. Furthermore, steam may be diluted with Ar, He, nitrogen, oxygen, air carbon dioxide or the like.

In the present invention, the heat-seal side has a composition ratio of an oxygen atom to a carbon atom which ranges from 2.5% to 20% and is larger than a theoretical value. Consequently, a desired heat sealability can be achieved. The composition ratio (O/C) herein refers to a ratio of the number of oxygen atoms (O) to the number of carbon atoms (C) both of which numbers have been obtained by measuring the film surface by an X-ray electron spectroscopy method (XPS). Furthermore, the theoretical value refers to the one in the resin composition composing the film. For example, since the theoretical value is (C₁₀O₄H₈)n in the case of PET, the theoretical value of the composition ratio is obtained as 4/10=0.4000. A small amount of hydrocarbon is usually adherent to the surface of this type of film and accordingly, an actually measured value is considered to be smaller than the theoretical value.

The research made by the inventors reveals that the aforesaid composition ratio (O/C) is larger than the theoretical value in a range from 2.5% to 20%, that is, a desirable heat sealability can be achieved in the range from 102.5% to 120% of the theoretical value. More preferably, a more desirable heat sealability can be achieved when the composition ratio is not less than 105% and not more than 115%. Furthermore, a desirable heat sealability cannot be obtained when the composition ratio is less than 102.5% of the theoretical value or when the composition ratio exceeds 120% of the theoretical value.

The intermediate film includes a layer of the heat-sealed biaxially oriented saturated polyester films and the layer has a thickness of not less than 400 µm. Consequently, the strength of the pile glass can be improved.

The intermediate film includes at least two resin film layers of different types further heat-sealed to the heat-sealed layer of the biaxially oriented saturated polyester films. Consequently, the intermediate film can possess compound functions resulting from combination of the biaxially oriented saturated polyester film with other resin film layers with various functions such as improving adhesiveness to the glass plate, cutting off ultraviolet lays, improving heat insulation, etc.

More specifically, each of the different types of resin film layers comprises a polyvinyl butyral resin (PVB) or ethylene vinyl acetate resin (EVA) and is disposed on composition surfaces of the glass plates and the intermediate film respectively. Since each of PVB and EVA has a good adhesion, the adherability of the intermediate film and the glass plate can be improved, whereupon an effect of preventing broken pieces of glass from scattering upon its breakage can also be improved.

In this regard, it is preferable that the resin film layer of PVB or EVA has a small thickness from an economic point of view. Each of the resin films of the different type is desirable to have a thickness of not more than 500 µm or more preferably, not more than 300 µm. Furthermore, each resin film of the different type and the layer of the heat-sealed biaxially oriented saturated polyester film are joined together by heat-sealing. In this case, too, it is desirable to apply the low-temperature plasma treatment to both films. However, a good heat-seal is possible even when the low-temperature plasma treatment is applied at least to the composition face of the biaxially oriented saturated polyester film.

The invention also provides a method of manufacturing a piled glass including at least two glass plates and an intermediate film disposed between the glass plates. The intermediate film has a layer formed by heat-sealing at least two biaxially oriented saturated polyester films. The method comprises applying a low-temperature plasma treatment to surfaces of the biaxially oriented saturated polyester films composing the intermediate film so that the biaxially oriented saturated polyester films are heat-sealable at a heating temperature ranging from 100°C to 200°C, disposing the films composing the intermediate film between the glass plates so that the glass plates and the films of the intermediate film are formed into a pile, and heat-pressing or heat-rolling the pile so that the pile is heat-sealed in a lump. Consequently, a plurality of films composing the intermediate film, the glass plate and the intermediate film can be heat-sealed directly without use of an adhesive agent in a lump. Thus, the piled glass can be obtained through simplified steps. In this regard, conditions for pile in the heat-press and heat-rolling can be selected according to the layer composition of the piled glass to be made, an adhesion temperature of the intermediate film, the thickness of the glass plate or the like. The temperature generally ranges from 100°C to 150°C.

The invention will be described, merely by way of example, with reference to the accompanying drawings, in which:
FIG. 1 is a schematic longitudinal section of the piled glass of first to third embodiments of the present invention;
FIG. 2 is a schematic longitudinal section of the piled glass of a fourth embodiment of the invention; and
FIG. 3 shows the results of an experiment conducted for examination of crime-proof of the piled glasses.

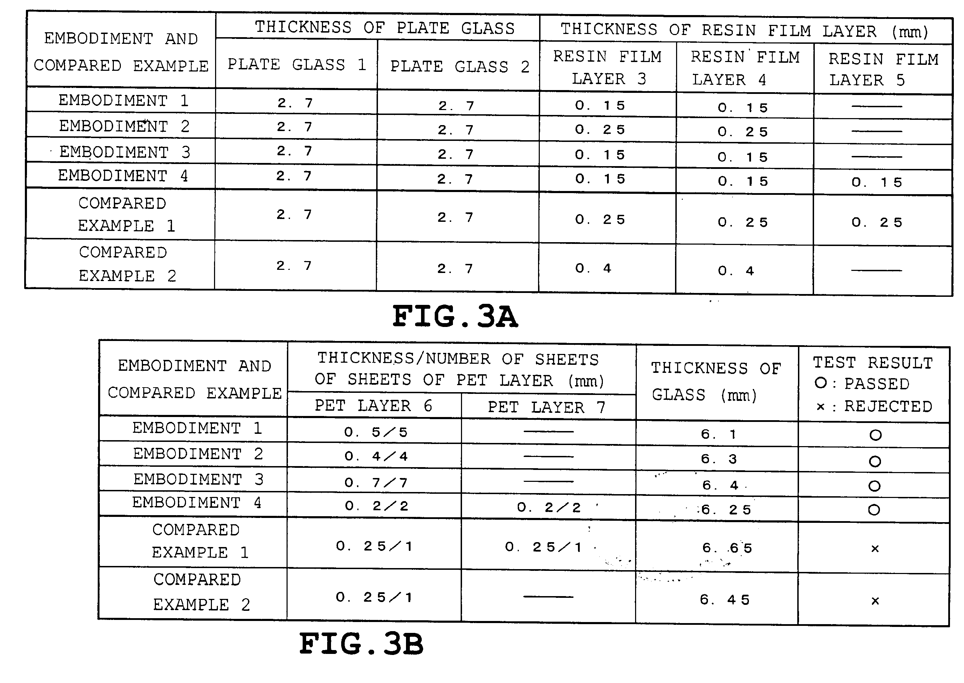

Several embodiments of the present invention will be described with reference to the accompanying drawings. FIG. 3 shows experimental results obtained from piled glasses of embodiments 1 to 4. Each piled glass is configured as recited in the claims and manufactured by the method as recited in the claims. More specifically, the piled glass of each embodiment comprises two glass plates and an intermediate film interposed between the glass plates. The intermediate film includes a biaxially oriented saturated polyester film or more specifically, a layer (hereinafter, "PET layer") formed by heat-sealing at least two biaxially oriented saturated polyester films and a resin film layer of a type different from the PET layer or more specifically a resin film layer comprising an ethylene vinyl acetate resin (EVA).

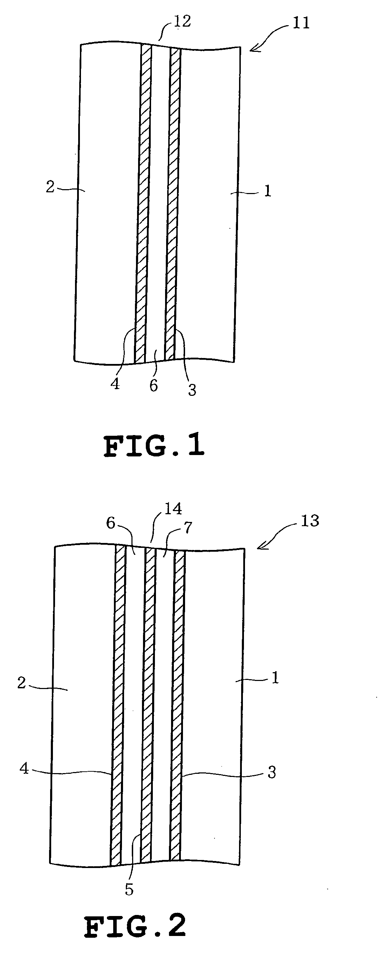

FIG. 1 schematically shows a sectional arrangement of the piled glass 11 of the first to third embodiments of the invention. FIG. 2 schematically shows a sectional arrangement of the pile glass 13 of the fourth embodiment. Layers as shown in FIGS. 1 and 2 differ from actual layers in a balance of thicknesses or the like. Furthermore, only the different type of resin film layer (EVA film) is hatched for easiness in view.

The piled glass shown in FIG. 1 comprises two glass plates 1 and 2, and an intermediate film 12 interposed between the glass plates 1 and 2. The intermediate film 12 includes a PET layer 6 and two resin layers 3 and 4 disposed on both sides of the PET layer respectively. The piled glass 13 shown in FIG. 2 comprises two glass plates 1 and 2, and an intermediate film 14 interposed between the glass plates 1 and 2. The intermediate film 14 comprises three resin film layers 3, 4 and 5, and two PET layers 6 and 7 both of which are alternately stacked into five layers.

More specifically, each of the glass plates 1 and 2 comprises a float glass which is 900 mm long and 1100 mm broad and has a thickness of 2.7 mm. Furthermore, as shown in FIG. 3, each of the resin film layers 3 to 5 in the embodiments 1, 3 and 4 comprises an EVA film having a thickness of 150 µm whereas each of the resin film layers 3 to 5 in the second embodiment comprises an EVA film having a thickness of 250 µm. Each EVA film is a Melthene G film manufactured and sold by Tosoh Corporation, Tokyo under the registered trademark of "Melthene," for example. Low-temperature plasma treatment is applied to both sides of each of the resin film layers 3 to 5 by a low-temperature plasma treatment apparatus of the internal electrode system. However, the resin film layers may be used without application of the low-temperature plasma treatment.

Each of the PET layers 6 and 7 comprises two or more biaxially oriented PET films heat-sealed together. A thickness of each PET film should not be limited to a specific value but two or more commercially available PET films may be stacked so that a desired thickness is obtained. For example, in order that the thickness of the PET film may be set at 400 µm, four PET films each of which is 100 µm thick are used. Alternatively, eight PET films each of which is 50 µm thick may be used. Furthermore, two PET films each of which is 100 µm thick and four PET films each of which is 50 µm thick may be combined together. Commercially available PET films include types T60, HT10, HT50, S10, etc. manufactured and sold under the registered trademark, "Lumirror" by Toray Industries Inc., Tokyo.

Embodiment 1 uses the aforesaid type HT10 PET film of "Lumirror" which is 100 µm thick. Each of embodiments 2 to 4 uses the aforesaid type T60 PET film of "Lumirror" which is 100 µm thick. As shown in FIG. 3, the PET layer 6 comprises five PET films stacked and heat-sealed together in embodiment 1. The PET layer 6 of embodiment 2 comprises four PET films stacked and heat-sealed together. The PET layer 6 of embodiment 3 comprises seven PET films stacked and heat-sealed together. Accordingly, the PET layers 6 of each of embodiments 1 to 3 are 500 µm, 400 µm and 700 µm thick respectively. Additionally, each of the PET layers 6 and 7 in embodiment 4 comprises two PET films stacked and heat-sealed together. Accordingly, each of the PET layers 6 and 7 in embodiment 4 is 200 µm thick (400 µm in total).

In this regard, a low-temperature plasma treatment is applied to heat-sealed sides (both sides) of each PET film by a low-temperature plasma treatment apparatus of the internal electrode system. As a result, each PET film is heat-sealable at a temperature (a heating temperature ranging from 100°C to 200°C) equal to or lower than a melting temperature thereof. Furthermore, as the result of the low-temperature plasma treatment, a composition ratio X (O/C) of the number of oxygen atoms (O) to the number of carbon atoms (C) is larger than a theoretical value in a range from 2.5% to 20%. More specifically, the composition ratio is larger by 7% than the theoretical value.

The piled glasses 11 and 13 of embodiments 1 to 4 are manufactured as follows. Firstly, a low-temperature plasma treatment step is carried out. In the step, the low-temperature plasma treatment is applied to the EVA films composing the respective resin film layers 3 to 5. The low-temperature plasma treatment is also applied to surfaces (composition faces) of a plurality of the PET films composing the PET layers 6 and 7. Subsequently, the EVA films composing the respective resin film layers 3 to 5 are stacked between the glass plates 1 and 2 so that the above-described combination is obtained. A plurality of the PET films composing each of the PET layers 6 and 7 are also stacked and between the glass plates 1 and 2. In addition, the stacked films are held between the glass plates 1 and 2 and heated at a relatively lower temperature (100°C to 150°C, for example) equal to or lower than the melting point of PET and then pressurized so that the stacked films are heat-sealed together in a lump.

In this regard, since the composition surfaces of the EVA films and PET films are previously treated by the low-temperature plasma treatment step, the films are heat-sealable at a temperature equal to or lower than the melting point (at the heating temperature ranging from 100°C to 200°. Consequently, the PET films are desirably heat-sealed together, and the PET film and EVA film can desirably be heat-sealed together. Furthermore, the EVA films (the resin films 3 and 4) and the glass plates 1 and 2 are desirably bonded together.

A test was conducted to examine the crime-proof performance of each of the piled glasses 11 and 13 of the embodiment 1 to 4 according to the CEN (European Committee for Standardization) Standard "TC129N222E." Furthermore, for purposes of comparison, the same test was conducted regarding compared examples 1 and 2 as shown in FIG. 3. The piled glasses of compared examples 1 and 2 differ from the above-described embodiments 1 to 4 in the arrangement of the intermediate film. That is, the PET layer is composed of a single PET film with a thickness of 250 µm. Furthermore, the thickness of the resin film layer comprising the EVA film is increased so that the entire thickness of the piled glass is rendered equal to or larger than the thicknesses of the piled glasses of embodiments 1 to 4.

In the test, a steel ball having a weight of 4.11 kg and a diameter of 100 mm was caused to fall free from the level of 9 m onto centrally located three points on a test piece which was 1100 mm long and 900 mm broad. The crime proof was determined depending upon presence or absence of penetration. When no penetration was present in the test piece after three times of free fall of the steel ball, the test piece was determined to be passed as P4A of the aforesaid Standard. When a penetration was present in the test piece, the test piece was determined to be rejected with respect to P4A. TC129N222E of the CEN Standard classifies the crime-proof standard into nine levels depending upon an expected manner of breaking a glass. The level P4A indicates a crime-proof glass corresponding to a way of making in the glass a small opening using a middle-size tool such as a small bur through which an arm can be put such that an intruder detaches a crescent of the window, entering into a house. FIG. 3 shows the results of the test.

As obvious from FIG. 3, all the piled glasses 11 and 13 of embodiments 1 to 4 passed the P4A level. However, the piled glasses of compared examples 1 and 2 were rejected although each of the piled glasses 11 and 13 has a total thickness equal to or larger than embodiments 1 to 4. In embodiments 1 to 4, the PET layers 6 and 7 were made by stacking and heat-sealing a plurality of PET films. Consequently, the strength of the piled glasses is considered to have been improved. In this case, as obvious from the comparison of embodiment 4 with compared example 1, the strength of the PET layer can be increased by stacking the PET films. In other words, the strength of the PET film can be increased more by two heat-sealed PET films each having a thickness of 100 µm than by a single PET film having a thickness of 250 µm.

Furthermore, in the piled glasses of embodiments 1 to 4, high heat-resistant PET films 6 and 7 had relatively larger thicknesses respectively although this is not shown in FIG. 3. Consequently, the heat resistance of each of the PET films 6 and 7 can be improved as compared with a case where a polycarbonate film is used. As a result, a period of time occupied on the melting of the intermediate film can be increased. Accordingly, embodiments 1 to 4 can provide the respective piled glasses which are advantageous in the resistance to penetration and have high crime-proof performance.

Furthermore, each of the PET films composing the PET layers 6 and 7 is thin (100 µm). Accordingly, as compared with a case where a single PET film having a thickness of 400 µm or above, the piled glasses of the embodiments have high evenness in the thickness and high transparency. Consequently, a transparent piled glass with no distortion can be obtained.

Furthermore, the intermediate film layer comprises the PET film as a main component and the resin film layer which is composed of the EVA film and can be thinned. As a result, the material cost of the pile glass can be reduced. Moreover, a plurality of films composing the intermediate film are stacked and heat-sealed in a lump by way of hot press. Consequently, since the piled glass can be obtained through simple manufacturing steps, the manufacturing cost can also be reduced.

The invention should not be limited to the embodiments described above with reference to the accompanying drawings. These embodiments may be modified without departing from the scope of the invention as follows. Although two glass plates are used in each of the foregoing embodiments, three or more glass plates may be used. In this case, the glass plates and the intermediate films are stacked alternately. When each intermediate film is composed in the same arrangement as described above, the expected object can be achieved. The thickness of the glass plate and the thickness of the whole piled glass can be modified.

The intermediate film has a three-layer or five-layer structure in the foregoing embodiments. However, the intermediate film may be formed into a two-, four- or six-layer structure. In this case, too, a piled glass with high crime-proof performance can be obtained when the piled glass is provided with a layer of two or more biaxially oriented saturated polyester films heat-sealed. The intermediate film may be composed of only the layer (a single layer) of two or more biaxially oriented saturated polyester films heat-sealed. In this case, too, each glass plate and the intermediate film can directly be heat-sealed as the result of the low-temperature plasma treatment applied to the surface of the intermediate film. The biaxially oriented saturate polyester film should not be limited to the PET film. For example, a biaxially oriented PEN film, a biaxially oriented PBT film or the like may be used. It is desirable that the thickness of a single film is not more than 250 µm and that the whole layer should have a thickness not less than 400 µm.

Films with various functions may be used as the different type of resin film layer provided in the intermediate film. For example, in the case of the piled glass 13 (see FIG. 2) of one of the foregoing embodiments, the resin film layer 5 located in the middle of the intermediate film 14 may comprise a colored film or a patterned film so that an ornamental effect is improved. Alternatively, a film with a high ultraviolet cut-off effect or heat-ray reflecting film may be used so that a heat insulation effect (energy saving effect) is improved. However, it is preferred that the EVA or PVB film which is suitable for an adhesive layer and has a high effect of preventing broken glass pieces from scattering upon breakage of glass is used at a composition surface side of the intermediate film adhered to the glass plate. The EVA or PVB film has a suitable thickness equal to or smaller than 500 µm, or more preferably equal to or smaller than 300µm.

In the foregoing embodiments, the hot press machine is used so that the whole material is heat-sealed in a lump by the hot press machine. However, a hot rolling machine may be used to heat-seal the material. In this case, a heating temperature can range from 100°C to 200°C. Furthermore, for example, two or more PET films may previously be heat-sealed into a thick PET film. Thereafter, the thick PET film may be heat-sealed together with the glass plates, the EVA film and the like.

## Claims

1. A piled glass which comprises at least two glass plates (1, 2) and an intermediate film (12; 14) disposed between the glass plates (1, 2), **characterized in that** the intermediate film (12; 14) has a layer formed by heat-sealing at least two biaxially oriented saturated polyester films, and the biaxially oriented saturated polyester films have respective heat-sealed sides to which a low-temperature plasma treatment has been applied.

2. The piled glass according to claim 1, **characterized in that** the heat-sealed side of each biaxially oriented saturated polyester film has a composition ratio (O/C) of oxygen atoms (O) to carbon atoms (C) which is larger than a theoretical value in a range from 2.5% to 20%.

3. The piled glass according to claim 1, **characterized in that** the intermediate film (12; 14) includes a layer of the heat-sealed biaxially oriented saturated polyester films and the layer has a thickness of not less than 400 µm.

4. The piled glass according to claim 1, **characterized in that** the intermediate film (12; 14) includes at least two resin film layers of a different type further heat-sealed to the heat-sealed layer of the biaxially oriented saturated polyester films.

5. The piled glass according to claim 4, **characterized in that** the resin film layers (3, 4) of the different type each comprise a polyvinyl butyral resin or ethylene vinyl acetate resin and disposed on composition surfaces of the glass plates (3, 4) and the intermediate (12, 14) film respectively.

6. The piled glass according to claim 5, **characterized in that** each of the resin films (3, 4) of the different type has a thickness of not more than 500 µm.

7. A method of manufacturing a piled glass including at least two glass plates (1, 2) and an intermediate film (12; 14) disposed between the glass plates (1, 2), the intermediate film (12; 14) having a layer formed by heat-sealing at least two biaxially oriented saturated polyester films, the method **characterized by**:
applying a low-temperature plasma treatment to surfaces of the biaxially oriented saturated polyester films composing the intermediate film (12, 14) so that the biaxially oriented saturated polyester films are heat-sealable at a heating temperature ranging from 100°C to 200°C;
disposing the films composing the intermediate film between the glass plates (1, 2) so that the glass plates (1, and 2) and the films of the intermediate film (12, 14) are formed into a pile; and
heat-pressing or heat-rolling the pile so that the pile is heat-sealed in a lump.
